Europäisches Patentamt

European Patent Office

Office européen des brevets

(19)

(11) Numéro de publication : **0 150 150 B1**

(12) **FASCICULE DE BREVET EUROPÉEN**

(45) Date de publication du fascicule du brevet :
30.11.88

(51) Int. Cl.⁴ : **G 02 B 6/38**

(21) Numéro de dépôt : **85400068.4**

(22) Date de dépôt : **15.01.85**

(54) **Dispositif de mise en application des faces optiques d'au moins une paire de fibres optiques dans un dispositif de raccordement.**

(30) Priorité : **24.01.84 FR 8401052**

(43) Date de publication de la demande :
**31.07.85 Bulletin 85/31**

(45) Mention de la délivrance du brevet :
**30.11.88 Bulletin 88/48**

(84) Etats contractants désignés :
**DE GB IT SE**

(56) Documents cités :
**DE-A- 2 518 319**
**GB-A- 2 034 069**
**US-A- 3 919 037**
**PATENTS ABSTRACTS OF JAPAN, vol. 6, no. 129 (P-128)[1007], 15 juillet 1982, page 107P128;**

(73) Titulaire : **SOCAPEX**
**10 bis, quai Léon Blum**
**F-92153 Suresnes (FR)**

(72) Inventeur : **Soster, Marie-Claude**
**THOMSON-CSF SCPI 173, bld Haussmann**
**F-75379 Paris Cedex 08 (FR)**
Inventeur : **Giraud, Jean-Michel**
**THOMSON-CSF SCPI 173, bld Haussmann**
**F-75379 Paris Cedex 08 (FR)**

(74) Mandataire : **Clanet, Denis et al**
**Cabinet Beau de Loménie 55, rue d'Amsterdam**
**F-75008 Paris (FR)**

Jouve, 18, rue St-Denis, 75001 Paris, France

## Description

La présente invention a pour objet un dispositif de mise en application des faces optiques d'au moins une paire de fibres optiques dans un dispositif de raccordement.

La mise en place de fibres optiques dans un dispositif de raccordement par exemple du type présentant un V dans lesquelles les fibres sont mises bout-à-bout, nécessite que les fibres soient aboutées par coulissement longitudinal. Cette opération est jusqu'à présent réalisée manuellement.

La présente invention propose un dispositif permettant de réaliser cet aboutement et dans lequel l'opération d'avance de la fibre optique est réalisée sans que la main de l'opérateur soit en contact avec celle-ci.

Le dispositif selon l'invention peut être utilisé notamment avec un dispositif de raccordement tel que celui décrit dans la demande de brevet français No. 83 20197 déposé le 16 décembre 1983 par la Demanderesse et intitulé « DISPOSITIF DE CONNEXION SEMI-PERMANENT POUR FIBRES OPTIQUES ET PROCEDE POUR SA MISE EN OEUVRE ». Il peut également être utilisé avec d'autres dispositifs de raccordement nécessitant la mise bout-à-bout par translation de deux fibres optiques.

On connaît, du document DE-A-2 518 319 ou encore du document US-A-3 919 037, des dispositifs de mise en application des faces optiques d'au moins une paire de fibres optiques dans un dispositif de raccordement, qui comportant :

- une platine comportant des moyens pour la monter de manière amovible dans une position donnée par rapport au dispositif de raccordement ;
- au moins une paire de chiens de bridage susceptibles de se trouver dans l'une ou l'autre de deux positions, une position de repos où au moins l'une des dites fibre est laissée libre et une position active où ladite fibre est bridée en vue d'être déplacée pour réaliser ladite mise en application ;
- des moyens pour déplacer longitudinalement ladite paire de chiens de bridage en direction de l'autre fibre optique de la paire lorsque les chiens de bridage sont en position active.

Les dispositifs de bridage et les moyens pour les déplacer sont toutefois relativement sommaires et nécessitent des interventions manuelles.

Selon l'invention, un dispositif du type précité est caractérisé en ce que chacun des chiens de bridage comporte un levier articulé autour d'un axe et les leviers pouvant d'un côté des axes, coopérer entre eux dans ladite position active pour tenir la fibre comme des ciseaux et, lesdits leviers étant, de l'autre côté des dits axes rappelés par des moyens à ressort dans ladite position de repos, la rotation des leviers autour des axes en vue de les amener dans l'une ou l'autre desdites positions étant commandée par un coulisseau, et en ce que les moyens pour déplacer ladite paire de chiens de bridage comportent un pion entraînant un support mobile portant ladite paire de chiens de bridage.

Selon une variante, ledit support peut être poussé par ressort dans la direction où les fibres sont mises en application et ledit pion peut être disposé de manière à constituer une butée mobile pour ledit support de manière à réaliser son entraînement.

Selon un mode de réalisation préféré, le déplacement des chiens de bridage ainsi que leur mise selon l'une ou l'autre des deux positions précitées est réalisé à l'aide d'une commande unique qui, dans ce but est agencée de manière à commander simultanément la position desdits chiens de bridage et le déplacement dudit support selon la séquence suivante :
- rotation de la commande dans un premier sens de manière à mettre les chiens de bridage en position active ;
- poursuite de la rotation de la commande pour réaliser l'avance du support, ce qui permet de mettre les faces optiques des fibres en contact ;
- rotation de la commande en sens inverse de manière, dans un premier temps, à mettre les chiens en position de repos et à reculer le support, ce qui permet de dégager la fibre des chiens lorsque les faces optiques des fibres ont été mises en contact.

Selon une variante, un premier ergot est porté par le coulissement et est engagé dans une rainure hélicoïdale portée par ladite commande, une bague est montée libre en rotation autour d'une portion de ladite commande et présente un second ergot coopérant avec une butée de telle manière que la bague soit entraînée en rotation pour entraîner l'avance du support après que les chiens aient été mis en position active, ladite bague présentant une rampe hélicoïdale coopérant avec ledit pion qui est solidaire du support, de manière à déplacer ce dernier.

Le coulisseau peut porter à une extrémité un logement pour chacun des chiens de bridage, chaque logement recevant une bille disposée de manière à transmettre le mouvement de translation du coulisseau sous forme d'un mouvement de rotation des chiens de bridage.

L'invention sera mieux comprise à la lecture de la description qui va suivre donnée à titre d'exemple non limitatif en liaison avec les figures qui représentent :
- les figures 1a et 1b, respectivement en coupe longitudinale et transversale, un premier mode de réalisation de l'invention ; et
- les figures 2a à 2c, respectivement une coupe longitudinale, une coupe partielle transversale et une coupe horizontale partielle du mode préféré de l'invention.

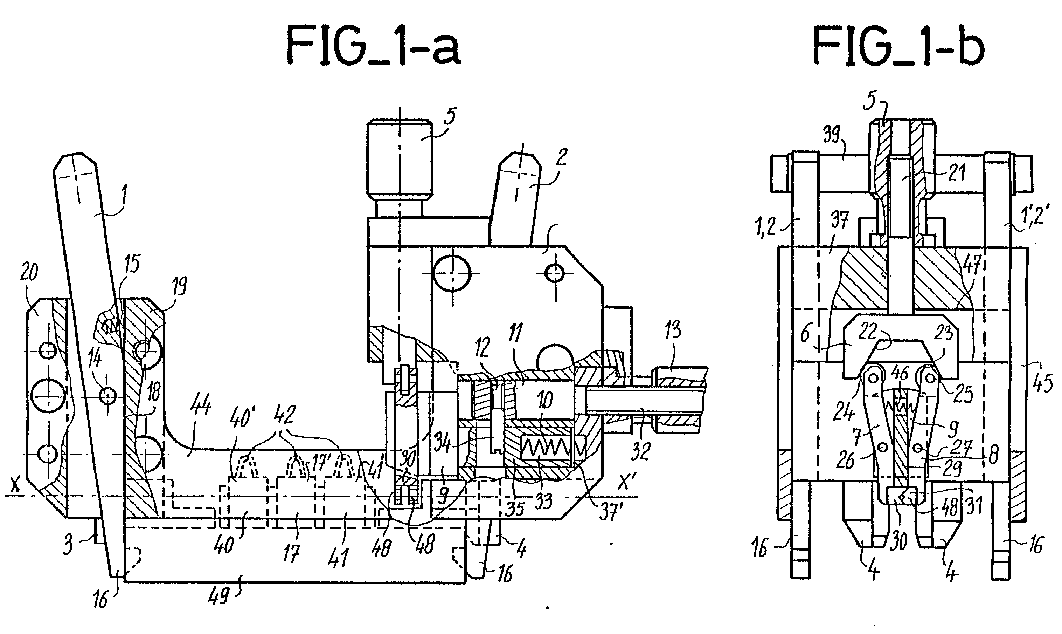

Les figures 1a et 1b montrent un dispositif de raccordement tel que décrit dans la demande de brevet mentionnée ci-dessus. Il comporte un support présentant un rainurage en forme de V destiné à recevoir les extrémités des fibres optiques à abouter et comprenant trois parties, à savoir une partie centrale 17 destinée à recevoir une bride de réalignement 17' pour maintenir élastiquement les extrémités des fibres dénudées et acollées bout-à-bout, et deux parties d'extrémités 40 et 41 destinées à recevoir chacune une bride de rétention 40' et 41' destinée à maintenir en position les fibres dans une région où elles ne sont pas dénudées, ainsi que des moyens de serrage 42 constitués par des clips et destinés à serrer la bride de réalignement 17 des brides de rétention 40 et 41, ces moyens présentant en ce qui concerne la bride de réalignement (bride élastique) et au moins une bride de rétention deux positions de serrage, la première permettant le coulissement d'au moins une fibre optique le long du rainurage en forme de V et la seconde assurant son blocage en position.

Le dispositif de raccordement est monté sur un bornier 49. Le bornier 49 peut comporter une pluralité de dispositifs de raccordement.

Le dispositif selon l'invention comporte deux flancs 44 et 45 portant chacun deux leviers de verrouillage. Ainsi, à la figure 1a on voit que le flanc 44 porte des leviers de verrouillage 1 et 2. Chacun des quatre leviers de verrouillage se termine à l'extrémité inférieure par un crochet 16, venant s'agrafer dans une ouverture correspondante du bornier 49. Chacun des leviers est rappelé par un ressort 15 et pivote autour d'un axe horizontal 14. Les leviers sont accouplés deux par deux par l'intermédiaire d'une barre horizontale 39.

Les flancs 44 et 45 sont portés par un corps 37 dans lequel sont logées des commandes mécaniques du dispositif.

Celles-ci se composent d'une part d'un premier bouton de commande 5 destiné à mettre les chiens de bridage dans l'une ou l'autre de deux positions, l'une de repos où la fibre est laissée libre de se déplacer et l'autre ou la fibre est bridée, son déplacement étant ensuite réalisé par translation des chiens de bridage obtenus par l'action d'un second bouton de commande 13.

Plus spécifiquement à la figure 1b, le bouton 5 coopère avec une tige filetée 21 présentant à sa partie inférieure une fourchette 6 comportant deux parties biseautées 22 et 23 coopérant avec des galets 24 et 25 portés par des leviers respectivement 7 et 8 articulés respectivement autour d'axes 26 et 27. Les leviers 7 et 8 portent à la partie inférieure chacun un chien de bridage respectivement 30 et 31 constitué de deux secteurs en V 48 imbriqués et dont le recouvrement en ciseau permet de bloquer la fibre en position. On voit à la figure 1a que chacun des chiens de bridage présente deux secteurs en V 48 s'interdigitant avec les secteurs correspondant du chien opposé. Au-dessus des axes 26 et 27, les leviers 7 et 8 sont écartés par un ressort de compression 46 de manière à maintenir les galets 24 et 25 contre les biseaux 22 et 23. Dans ces conditions, l'abaissement de la fourchette 6 par action sur le bouton 5 entraîne l'ouverture des chiens de bridage. Les axes 26 et 27 sont montés sur un support présentant un prolongement 29 servant de butée à la fermeture des chiens de bridage de manière à éviter tout effort excessif sur la fibre bridée. La remontée de la fourchette 6 est limitée par un rebord 47 du corps 37. Ceci crée également une fonction de butée à la fermeture des chiens de bridage pouvant éventuellement se substituer à celle précitée.

L'avance du support 9 qui porte les chiens de bridage 30 et 31 est réalisé par rotation du bouton de commande 13. Le bouton 13 entraîne une tige 32 provoquant l'avance d'un coulisseau 11 portant un doigt 12 dont l'extrémité 34 coopère avec une butée 35 du support 9 des chiens de bridage, celui-ci étant poussé vers l'avant par un ressort 10 disposé dans un logement 33 et s'appuyant sur un logement d'une plaquette 37'.

L'outil peut être alors mis en œuvre de la manière suivante :

- Tout d'abord, on l'agrafe sur le bornier 49 à l'aide des crochets 1, 1', 2 et 2', le dispositif vient se positionner sur le dispositif de raccordement grâce à deux paires de guides 3 et 4.

- On tourne alors le bouton 5 dans le sens horaire de telle sorte que la fourchette 6 remonte et libère les chiens de bridage 30 et 31 de telle sorte que ceux-ci serrent la fibre. La fibre à raccorder étant pincée, on actionne le bouton 13 dans le sens anti-horaire pour faire avancer le coulisseau 11. Celui-ci, par l'intermédiaire du doigt 12, libère l'action du ressort taré 10 qui pousse le support 9 des chiens de bridage entraînant la fibre.

- On continue alors de tourner le bouton 13 jusqu'à ce qu'on sente l'effet de butée produit par le fait que la fibre prise dans les chiens de bridage 30 et 31 s'arrête contre la première fibre déjà positionnée dans le module de raccordement.

- On place les clips 42 de manière à assurer la rétention de la deuxième fibre.

- On place ensuite le clip 42 de la bride élastique 17 en position de réalignement des deux fibres, dans laquelle elles sont maintenues bout-à-bout dans leur V.

- On ouvre alors les chiens de bridage 30 et 31 en tournant le bouton 5 dans le sens anti-horaire afin de faire descendre la fourchette 6.

- On dégage l'outil du bornier en ouvrant les crochets 1, 2, 1' et 2' et on remet l'outil en position opérationnelle pour une nouvelle utilisation.

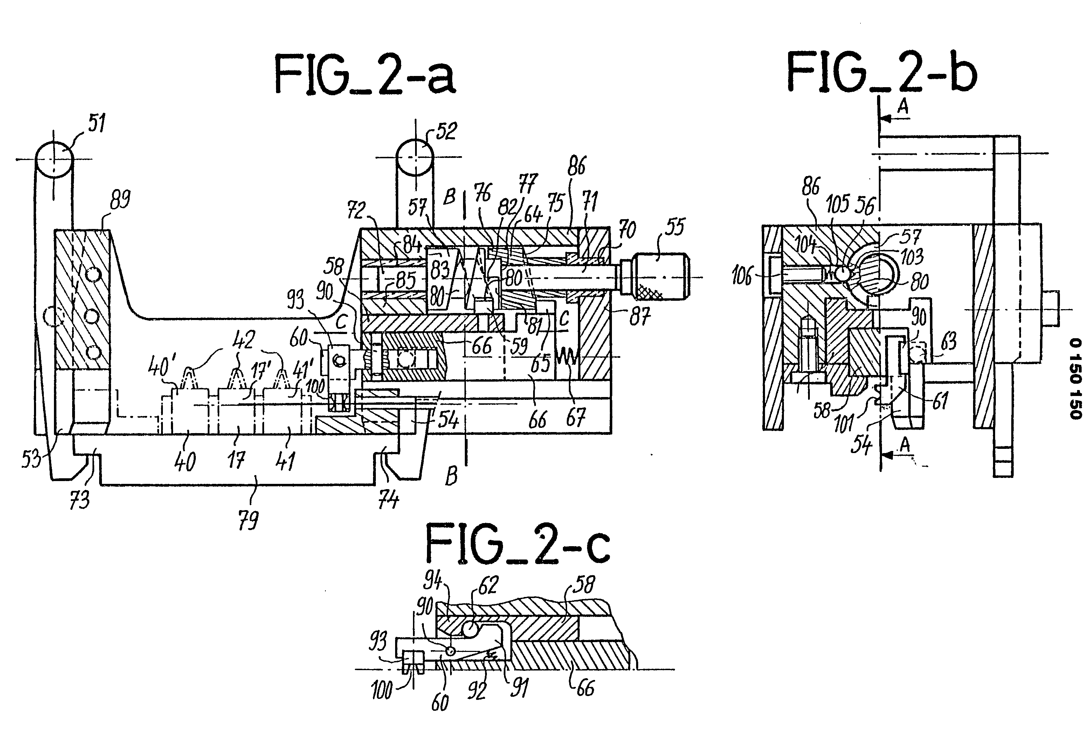

Selon les figures 2a à 2c, l'outil selon l'invention permet de réaliser l'ensemble des opérations de bridage de la fibre d'avance et de débridage de celle-ci à l'aide d'un seul bouton de commande 55.

L'outil selon l'invention est monté par des pinces 51 et 52 sur une platine 79 portant un dispositif de raccordement (17, 40, 41). Les chiens de bridage 60 et 61 sont montés en rotation chacun autour d'un axe 90. Chacun des chiens de bridage 60 et 61 comporte à une extrémité un support 93 portant deux profils en V référencé 100 pour le chien 60 et 101 pour le chien 61. A l'autre extrémité, chacun des chiens 60 et 61 présente un renflement 91 destiné à coopérer avec une bille 62 qui est prise entre le renflement 91 et un renflement 94 d'un poussoir 58. A la partie inférieure du renflement 91, chacun des chiens de bridage 60 et 61 est poussé par un ressort 92 dans la direction de fermeture, c'est-à-dire de bridage de la fibre. Les axes 90 de rotation des chiens de bridage 60 et 61 sont portés par un support mobile 66 rappelé à sa partie arrière par un ressort 67 de compression exerçant une action tendant à entraîner le support mobile 66 en direction d'avance de la fibre optique. Le déplacement vers l'avant du support mobile 66 est limité par une butée 65 coopérant avec une rampe hélicoïdale 75 d'une bague 64 montée libre en rotation autour d'une portion 71 d'un axe 72.

Un chariot mobile 58 est associé à un pion 59 coopérant avec une rainure hélicoïdale 80 portée par une portion centrale 57 de l'axe 72 entraîné en rotation par action sur le bouton 55.

L'axe 72 porte une empreinte longitudinale 103 dans laquelle vient porter une bille 56 poussée par un ressort 104 disposé dans un logement 105 et mis en place par une vis 106. Une bille 56' correspond de la même façon à la bague 64 et vient se loger dans une rainure 103' (non représentée) de celle-ci. Cette disposition facultative permet de repérer la position de repos laquelle les chiens de bridage sont en position arrière et ouverts.

La mise en œuvre de l'outil s'opère de la manière suivante.

Tout d'abord l'outil s'agrafe sur le bornier 79 à l'aide des crochets 51 et 52 et vient se positionner sur le dispositif de raccordement par des guides analogues aux guides 3 et 4 de la figure 1a et 1b mais non représenté.

A partir de la position de repos où les billes 56 sont logées dans les rainures 103 et 103', on tourne le bouton moleté 55 dans le sens horaire qui entraîne l'axe 72 pourvu d'une rampe hélicoïdale 80 ce qui a pour effet de faire avancer la fourchette 58 à l'aide du pion 59. Cette fourchette 58 actionne la fermeture des chiens de bridage 60 et 61 en libérant les billes 62. Cette opération s'effectue sur une rotation de l'axe 72 de 180° et a pour but de pincer la fibre qui sera ultérieurement entraînée de manière à la mettre en application contre celle déjà positionnée dans le dispositif de raccordement 17, 40 41. Lors de cette première rotation de 180°, la bague 64 n'est pas entraînée.

Lorsque la rotation se poursuit au-delà de 180°, la bague 57 entraîne la bague 64 par coopération entre un rebord 81 de la bague 57 et un ergot 76 de la bague 64. Sous l'effet de la rotation de la bague 64, la butée 65 portée par le chariot mobile 66 suit le contour de la rampe hélicoïdale formant came et provoque l'avance du chariot 66 et par conséquent de la fibre optique pincée par les chiens de bridage 60 et 61. Ce mouvement se poursuit jusqu'à ce qu'on arrive à une butée mécanique correspondant au fait que la fibre optique déplacée par des chiens de bridage s'arrête au contact de la première fibre déjà positionnée dans le dispositif de raccordement.

La rotation totale de l'axe 57 s'effectue nominalement sur 360°. On notera que la fourchette 58 continue d'être entraînée par la rampe hélicoïdale 80 lors de l'avance du support mobile 66.

Les fibres optiques ayant été mises bout-à-bout, on place les clips 42 de la bride de rétention 41 en position de blocage pour assurer la rétention de la deuxième fibre et on met le clip 42 de la bride élastique 17' en position de réalignement de la fibre.

Ensuite, on tourne le bouton 55 dans le sens anti-horaire. La fourchette 58 recule et revient en contact des billes 62 qui actionnent l'ouverture des chiens 60 et 61. Après une rotation de 180°, le rebord 81 de l'axe 72 vient entraîner la bague 64 par son ergot 76, ce qui permet au support mobile 66 de reculer, le mouvement se poursuivant jusqu'à butée mécanique correspondant à la position de repos. La position arrière du mécanisme est confirmée par l'encliquetage des deux billes 56 et 56' dans leurs empreintes 103 et 103' respectives sur l'axe 72 et sur la bague 64. L'outil peut alors être dégagé du bornier 79 en ouvrant les crochets 51 et 52, après quoi il peut être utilisé pour une nouvelle manipulation.

**Revendications**

1. Dispositif de mise en application des faces optiques d'au moins une paire de fibres optiques dans un dispositif de raccordement comportant :
- une platine (49, 79) comportant des moyens pour la monter de manière amovible dans une position donnée par rapport au dispositif de raccordement (17, 40, 41) ;
- au moins une paire de chiens de bridage (30, 31, 60, 61) susceptibles de se trouver dans l'une ou l'autre de deux positions, une position de repos où au moins l'une desdites fibres est laissée libre et une position active où ladite fibre est bridée en vue d'être déplacée pour réaliser ladite mise en application ;
- des moyens (34, 35, 65, 66, 75) pour déplacer longitudinalement ladite paire de chiens de bridage (33, 31, 60, 61) en direction de l'autre fibre optique de la paire lorsque les chiens de bridage (30, 31, 60, 61) sont en position active, caractérisé en ce que chacun des chiens de bridage (30, 31, 60, 61) comporte un levier (30, 31 ; 60, 61) articulé autour d'un axe (26, 27 ; 90), les leviers pouvant, d'un côté des axes, coopérer entre eux dans ladite position active pour tenir la fibre comme des ciseaux et, lesdits leviers étant de l'autre côté desdits axes rappelés par des moyens à ressort dans ladite position de repos, la rotation des leviers autour des axes (26, 27 ; 90) en vue de les amener dans l'une et l'autre desdites positions étant commandée par un coulisseau (6 ; 58), et ce que les moyens pour déplacer ladite paire de chiens de bridage comportent un pion (34, 65) entraînant un support mobile (35, 66) portant ladite paire de chiens de bridage (30, 31, 60, 61).

2. Dispositif selon la revendication 1, caractérisé en ce que ledit support mobile (35, 36) est poussé par ressort (10, 67) dans la direction où les fibres sont mises en application, et en ce que ledit pion (34, 65) est disposé de manière à constituer une butée mobile pour ledit support mobile (35, 66) de manière à réaliser son entraînement.

3. Dispositif selon la revendication 2, caractérisé en ce qu'il comporte un axe (72) agencé de manière à commander simultanément la position desdits chiens de bridage (60, 61) et le déplacement dudit support mobile (66), de manière à réaliser la séquence suivante :

- rotation de l'axe (72) dans un premier sens de manière à mettre les chiens (60, 61) en position active ;
- poursuite de la rotation de l'axe (72) pour réaliser l'avance du support (66), ce qui permet de mettre les faces optiques des fibres en contact ;
- rotation de l'axe (72) en sens inverse de manière, dans un premier temps, à mettre les chiens de bridage (60, 61) en position de repos et à reculer le support mobile (66), ce qui permet de dégager la fibre des chiens de bridage (60, 61) lorsque les faces optiques des fibres ont été mises en contact.

4. Dispositif selon la revendication 3, caractérisé en ce qu'un premier ergot (59) est porté par le coulisseau (58) et est engagé dans une rainure hélicoïdale (80) portée par ledit axe (72), en ce qu'une bague (64) est montée libre en rotation autour d'une portion (72) dudit axe (57) et présente un second ergot (76) coopérant avec une butée dudit axe (57) de telle manière que la bague soit entraînée en rotation pour entraîner l'avance du support mobile (66) après que les chiens aient été mis en position active, ladite bague (57) présentant à cet effet une rampe hélicoïdale (75) coopérant avec ledit pion (65) qui est solidaire du support mobile (66) de manière à déplacer ce dernier.

5. Dispositif selon une des revendications 1 à 4, caractérisé en ce que le coulisseau (58) porte à une extrémité un renflement (94) pour chacun des chiens de bridage, chaque renflement (94) coopérant avec un renflement correspondant (91) d'un chien de bridage (60, 61) pour recevoir une bille disposée de manière à transmettre le mouvement de translation du coulisseau (58) sous forme d'un mouvement de rotation des chiens de bridage (60, 61).

**Claims**

1. Device for mutually engaging the optical faces of at least one pair of optical fibers in a connecting device comprising :
- a base plate (49, 79) comprising means for removably mounting said plate in a given position with respect to the connecting device (17, 40, 41) ;
- at least one pair of clamping members (30, 31, 60, 61) adapted to be placed in either of two positions, a rest position wherein at least one of the said fibers is left free and an active position wherein said fiber is clamped with a view to being displaced in order to achieve said engagement ;
- means (34, 35, 65, 66, 75) for longitudinally moving said pairs of clamping members (33, 31, 60, 61) toward the other optical fiber of the pair when the clamping members (30, 31, 60, 61) are in active position, characterized in that each of said clamping members (30, 31, 60, 61) comprises a lever (30, 31 ; 60, 61) mounted for pivoting about an axis (26, 27 ; 90), the levers being able, on one side of the axes, to cooperate one with the others in said active position so as to hold the fiber like scissors and, said levers being, on the other side of said axes, recalled by spring means, in said rest position, the rotation of the levers about the axes (26, 26 ; 90) with a view to resuming either of said positions, being controlled by a slide (6 ; 58), and in that the means for moving said pair of clamping members comprise a finger (34, 65) driving a movable support (35, 66) carrying said pair of clamping elements (30, 31, 60, 61).

2. Device according to claim 1, characterized in that said movable support (35, 36) is urged by a spring (10, 67) in the direction where the fibers are engaging, and in that said finger (34, 65) is so placed as to constitute a moving stop for said movable support (35, 66) thereby driving the latter.

3. Device according to claim 2, characterized in that it comprises an axis (72) arranged so as to control simultaneously the position of said clamping members (60, 61) and the displacement of said movable support (66), in such a way as to achieve the following sequence :
- rotation of the axis (72) in a first direction so as to place the clamping members (60, 61) in active position ;
- continueing the rotation of axis (72) in order to advance the support (66), this permitting the optical faces of the fibers to be brought in contact one with the other ;
- rotation of axis (72) in reverse direction so as, first of all, to place the clamping members (60, 61) in rest position and to move the movable support (66) back, thereby allowing the fiber to be released from the clamping members (60, 61) when the optical faces of the fibers have been placed in contact one with the other.

- 4. Device according to claim 3, characterized in that a first lug (59) is carried by the slide (58) and is engaged in a helicoidal groove (80) carried by said axis (72), in that a ring (64) is mounted for free rotation about a portion (72) of said axis (57) and has a second lug (76) which cooperates with a stop member of said axis (57) such that the ring is driven in rotation for advancing the movable support (66) once the clamping members are placed in the active position, said ring (57) being provided to this effect with a helicoidal ramp (75) cooperating with said finger (65) which is fast with the movable support (66) so as to move the latter.

5. Device according to any one of claims 1 to 4, characterized in that the slide (58) is provided at one end with a thickened portion (94) for engaging the clamping members, each thickened portion (94) cooperating with a corresponding thickened portion (91) of a clamping member (60, 61) for receiving a ball disposed so as to transmit the translational movement of the slide (58) in the form of a rotation movement of the clamping members (60, 61).

**Patentansprüche**

1. Vorrichtung zum Einlegen optischer Stirnflächen von mindestens einem Paar optischer Fasern in eine Verbindungsvorrichtung, wobei folgendes vorgesehen ist :
- eine Platine (49, 79) mit Mitteln zur unbeweglichen Anordnung derselben in einer bezüglich der Verbindungsvorrichtung (17, 40, 41) gegebenen Position ;
- mindestens ein Paar von Klemmstücken (30, 31, 60, 61), die sich in der einen oder anderen Position von zwei Positionen einer Ruhestellung oder einer Aktivstellung befinden können, wobei in der Ruhestellung mindestens eine der genannten Fasern freigelassen ist und wobei in der Aktivstellung die Faser im Hinblick auf die Versetzung zur Realisierung des genannten Einlegens verbunden ist ;
- Mittel (34, 35, 65, 66, 75) zur Längsversetzung der Klemmstücke (30, 31, 60, 61) in Richtung der anderen optischen Faser des Paares, während sich die Klemmstücke (30, 31, 60, 61) in der Aktivstellung befinden, dadurch gekennzeichnet, daß jedes der Klemmstücke (30, 31, 60, 61) einen Hebel (30, 31 ; 60, 61) gelenkig angeordnet um eine Achse (26, 27 ; 90) aufweist, wobei die Hebel auf einer Seite der Achsen miteinander in der Aktivstellung zusammenarbeiten können, um die Faser wie eine Schere zu halten, wobei die Hebel auf der anderen Seite der Achsen durch Federmittel in die genannte Ruhestellung zurückgeholt werden, wobei die Drehung der Hebel um die Achsen (26, 27 ; 90) zum Erreichen der einen oder anderen der genannten Stellungen durch ein Gleitelement (6 ; 58) gesteuert wird, und ferner dadurch gekennzeichnet, daß die Mittel zur Versetzung der genannten Klemmstücke einen Mitnehmer (34, 65) aufweisen, der einen beweglichen Träger (35, 66), der die Klemmstücke (30, 31, 60, 61) trägt, mitnimmt.

2. Vorrichtung nach Anspruch 1, dadurch gekennzeichnet, daß der bewegliche Träger (35, 66) durch eine Feder (10, 67) in die Richtung vorgespannt ist, wo die Fasern zur Einlage gebracht sind, und daß der erwähnte Mitnehmer (34, 65) derart angeordnet ist, daß er für den erwähnten bewegten Träger (35, 66) einen beweglichen Anschlag derart bildet, daß seine Mitnahme realisiert wird.

3. Vorrichtung nach Anspruch 2, dadurch gekennzeichnet, daß eine Achse (72) derart angeordnet ist, daß gleichzeitig die Position der Klemmstücke (60, 61) und die Versetzung des beweglichen Trägers (66) derart gesteuert wird, daß nachstehende Folge realisiert wird :
- Drehung der Achse (72) in einem ersten Sinn derart, daß die Klemmstücke (60, 61) in eine Aktivstellung gebracht werden ;
- Einstellen der Drehung der Achse (72) zur Realisierung des Vorschubs des Trägers (66), um die Berührung der optischen Stirnflächen der Fasern vorzusehen ;
- Drehung der Achse (72) in einem umgekehrten Sinn derart, daß während einer ersten Zeit die Klemmstücke (60, 61) in Ruhestellung gebracht werden und der bewegliche Träger (66) zurückgebracht wird, was die Freigabe der Faser der Klemmstücke (60, 61) gestattet, während die optischen Stirnflächen der Fasern in Kontakt gehalten wurden.

4. Vorrichtung nach Anspruch 3, dadurch gekennzeichnet, daß ein erster Nocken (59) von dem Gleitelement (58) getragen wird und mit einer von der genannten Achse (72) getragenen schraubenlinienförmigen Nut (80) in Eingriff steht, daß eine Stange (64) frei zur Drehung um den einen Teil (72) der Achse (57) angeordnet ist und einen zweiten Nocken (76) bildet, der mit einem Anschlag der Achse (57) derart zusammenarbeitet, daß die Stange bei der Rotation mitgeführt wird, um den Vorschub des beweglichen Trägers (66) mitzunehmen, nachdem die Klemmstücke in die Aktivstellung gebracht sind, wobei die Stange (57) zu diesem Zweck eine schraubenlinienförmige Rampe (75) aufweist, die mit dem Mitnehmer (65) zusammenarbeitet, der derart mit dem beweglichen Träger (66) solid ausgebildet ist, daß letzterer versetzt wird.

5. Vorrichtung nach einem der Ansprüche 1 bis 4, dadurch gekennzeichnet, daß das Gleitelement (58) an einem Ende einen Vorsprung (94) für jedes der Klemmstücke trägt, wobei jeder Vorsprung (94) mit einem entsprechenden Vorsprung (91) des Klemmelements (60, 61) zusammenarbeitet, um eine derart angeordnete Kugel aufzunehmen, daß die Translationsbewegung des Gleitelements (58) in die Form einer Drehbewegung des Klemmelements (60, 61) umgewandelt wird.

# FIG_1-a

# FIG_1-b

0 150 150

FIG_2-b

FIG_2-a

FIG_2-c